# EUROPÄISCHE PATENTANMELDUNG

(11) **EP 0 957 281 A2**
(43) Veröffentlichungstag der Anmeldung: **17.11.1999**
(21) Anmeldenummer: 99108285.0
(22) Anmeldetag: 27.04.1999
(51) Int. Cl.: F16D 59/02, H02K 7/102

(54) **Elektromagnetisch betätigbare Bremse, insbesondere für Elektromotor**

(30) Priorität: 14.05.1998 DE 19821729; 25.08.1998 DE 19838658
(71) Anmelder: SEW-EURODRIVE GMBH & CO., D-76646 Bruchsal (DE)
(72) Erfinder: Pfann, Jochen, 75447 Sternenfels (DE); Fischer, Horst, 76698 Ubstadt-Weiher (DE); Becker, Günter, 76684 Östringen (DE)
(74) Vertreter: Bohnenberger, Johannes, Dr.

(57) **Zusammenfassung**

Die Erfindung betrifft eine elektromagnetisch betätigbare Bremse (10) mit einem Magnetkörper (1, 2), mit einem Bremsrotor (5, 6), der auf eine Welle, insbesondere die Antriebswelle eines Elektromotors, drehfest montierbar ist, so daß die Welle bremsbar ist, und mit einer Ankerscheibe (7), die durch eine Magnetkraft eines Elektromagneten des Magnetkörpers (1, 2) entgegen einer Federkraft beziehungsweise durch die Federkraft in Längsrichtung der Rotationsachse 4 der Welle axial bewegbar ist, wobei die Ankerscheibe (7) im gebremsten Zustand an einer Bremsfläche des Bremsrotors (5, 6) anliegt. Erfindungsgemäß sind zwischen der Ankerscheibe (7) und dem Magnetkörper (1, 2) in axialer Richtung hintereinander ein erstes Dämpfungselement (9) und ein zweites Dämpfungselement (8) zur Dämpfung von Schwingungen der Bremse angeordnet. Das erste Dämpfungselement (9) besteht aus einem anderen Material als das zweite Dämpfungselement (8).

## Beschreibung

Die Erfindung betrifft eine elektromagnetisch betätigbare Bremse nach dem Oberbegriff des Anspruchs 1. Die Erfindung betrifft weiterhin einen Elektromotor mit einer solchen Bremse, wobei ein Bremsrotor der Bremse auf einer Antriebswelle des Elektromotors drehfest montiert ist.

Bei einer derartigen Bremse ist eine Ankerscheibe in Längsrichtung der Rotationsachse der Welle axial bewegbar, so daß die Ankerscheibe durch eine Magnetkraft eines Elektromagneten des Magnetkörpers entgegen einer Federkraft bewegbar ist. In der umgekehrten Richtung ist die Ankerscheibe durch die Federkraft bewegbar. Somit kann durch Erregung oder Entregung des Elektromagneten die Bremse derart betätigt werden, daß sie einfällt beziehungsweise gelüftet wird.

Üblich sind insbesondere derartige Bremsen, bei denen zumindest eine Druckfeder in den Magnetkörper integriert ist, durch deren Druckkraft die Ankerscheibe gegen den Bremsrotor gedrückt wird, wenn der Elektromagnet entregt ist oder entregt wird. Bei Erregung des Elektromagneten wird eine Magnetkraft erzeugt, die entgegen der Federkraft der Druckfeder beziehungsweise der Druckfedern die Ankerscheibe von dem Bremsrotor lüftet, so daß der Bremsrotor und gegebenenfalls mit ihm verbundene drehbare Teile um die Rotationsachse rotieren können.

In modernen Fertigungslinien werden häufig Antriebe verwendet, die Elektromotoren mit derartigen Bremsen aufweisen. Das An-und Ausschalten der Bremsen, das heißt die Erregung und Entregung, und deren dauerhaft erregter Zustand trägt ebenso zur Schallerzeugung bei wie der Betrieb der Elektromotoren. Insbesondere im Hinblick auf Vorschriften zur Einhaltung bestimmter Grenzwerte für Schallpegel am Arbeitsplatz wird zunehmend größerer Wert auf geräuscharm betätigbare Bremsen gelegt.

Bei den elektromagnetisch betätigbaren Bremsen sind gleichstrom- und wechselstromerregbare Elektromagneten bekannt. Bei gleichstromerregbaren Elektromagneten wird üblicherweise der Gleichstrom durch Gleichrichtung eines Wechselstromes erzeugt. Im einfachsten Fall wird hierzu eine Diode verwendet, so daß ein pulsierender Gleichstrom entsteht. Mit zusätzlichen elektronischen Schaltungen kann dieser pulsierende Gleichstrom geglättet werden. Die Kosten für solche Schaltungen sind jedoch meist hoch. Im dauerhaft erregten Zustand kann der pulsierende Gleichstrom, insbesondere bei gelüfteter, an dem Magnetkörper anliegender Ankerscheibe, die Ankerscheibe zu Schwingungen anregen. Dadurch können Resonanzschwingungen ausgelöst werden. Dabei kann die Ankerscheibe selbst Bestandteil des in Resonanz schwingenden Systems sein.

Für die weltweit unterschiedlichen Nennspannungen der Wechselspannungsnetze werden Lösungen gesucht, durch die ein und derselbe Elektromagnet möglichst unabhängig von der Nennspannung eine vorgegebene Magnetkraft erzeugt. Hierzu verwendete elektronische Schaltungen zum Anschluß der Bremse an ein Wechselspannungsnetz sollen möglichst einfach aufgebaut sein. Insbesondere kann in solchen Schaltungen ein elektronischer Schalter verwendet werden, der als Halbleiter-Schalter ausgeführt ist. Dieser Schalter schaltet den Erregerstrom für den Elektromagneten unter Umständen mit höherer Frequenz ein und aus als die Netzfrequenz. Der somit erzeugte pulsierende Strom kann insbesondere bei gelüfteter, an dem Magnetkörper anliegender Ankerscheibe, die Ankerscheibe zu Schwingungen anregen. Da der pulsierende Erregerstrom im allgemeinen eine Vielzahl hoher Frequenzen aufweist, ist die Anregung von unerwünschten Schwingungen der Bremse beziehungsweise von Bauteilen der Bremse die Folge.

Die unbeweglichen Teile der Bremse können mit verhältnismäßig geringem Aufwand so ausgelegt werden, daß im wesentlichen keine störenden Schwingungen durch direkte Anregung der unbeweglichen Bauteile erzeugt werden.

Auch bei dem hochfrequenten pulsierenden Erregerstrom ist die Glättung unter Verwendung einer elektronischen Schaltung möglich. Diese elektronische Schaltung benötigt jedoch ein verhältnismäßig großes Bauvolumen, was dem Konzept der Miniaturisierung und des kompakten Aufbaus bei der Konstruktion von gattungsgemäßen Bremsen zuwiderläuft.

Ein weiterer Lösungsansatz besteht darin, das Pulsieren des Stromes zu vermindern, indem eine Reglerschaltung verwendet wird. Beispielsweise kann eine solche Schaltung nach dem Pulsweiten-Modulationsverfahren arbeiten. Derartige Schaltungen sind jedoch verhältnismäßig aufwendig und teuer und können darüber hinaus zu einem häufigen Schalten des elektronischen Schalters führen, wodurch wiederum hohe Frequenzen entstehen. Außerdem werden durch häufiges Schalten die Schaltverluste des elektronischen Schalters vergrößert und es muß daher auf eine ausreichende Wärmeabführung geachtet werden. In Anbetracht des hohen Integrationsgrades moderner gattungsgemäßer Bremsen wird die Lösung des Wärmeabfuhrproblems erschwert.

Die axial bewegbare Ankerscheibe bildet zusammen mit dem Elektromagneten und dem Federelement ein schwingungsfähiges System, dessen unerwünschte Anregung zu Schwingungen nicht vollständig ausgeschlossen werden kann. Insbesondere kann die Anregung zu Schwingungen durch Magnetostriktion erfolgen.

Zur Geräuschdämpfung beim Einfallen einer gattungsgemäßen Bremse, also beim Auftreffen der Ankerscheibe auf den Bremsrotor, ist aus der DE 28 53 802 A1 bekannt, auf den Bremsrotor eine Gummischicht aufzuvulkanisieren. Beim Lüften der Bremse oder im dauerhaft gelüfteten Zustand zeigt diese Maßnahme jedoch keine dämpfende Wirkung.

Ebenfalls zur Geräuschdämpfung, jedoch beim Lüften der Bremse ist aus der DE 41 26 672 C2 eine Dämpfungsscheibe bekannt, die zwischen der Ankerscheibe und dem Magnetkörper angeordnet wird, um den Aufprall der Ankerscheibe beim Lüften zu dämpfen. Die Dämpfungsscheibe ist aus Metallblech gefertigt und weist eine Vielzahl von Erhebungen auf, die beim Aufprall der Ankerscheibe elastisch verformt werden. Im dauerhaft gelüfteten Zustand liegt die Ankerscheibe jedoch nicht vollflächig an der Dämpfungsscheibe an, so daß das System aus Ankerscheibe und Dämpfungsscheibe zusätzlich zu Schwingungen anregbar ist. Diese Schwingungen können insbesondere auf weitere Bauteile der Bremse übertragen werden.

Aufgabe der vorliegenden Erfindung ist es, eine Bremse der eingangs genannten Art anzugeben, bei der Schwingungen der Ankerscheibe aufgrund unterschiedlicher Anregungsmechanismen möglichst weitgehend gedämpft werden. Weiterhin soll die Anregung von Schwingungen durch ein Anstoßen der Ankerscheibe im Bereich des Magnetkörpers während des Lüftens der Bremse möglichst vermieden werden.

Die Aufgabe wird durch eine Bremse mit den Merkmalen des Anspruchs 1 gelöst. Weiterbildungen sind Gegenstand der abhängigen Ansprüche.

Erfindungsgemäß sind zwischen der Ankerscheibe und dem Magnetkörper der Bremse in axialer Richtung hintereinander ein erstes Dämpfungselement und ein zweites Dämpfungselement zur Dämpfung von Schwingungen der Bremse angeordnet, wobei das erste Dämpfungselement aus einem anderen Material besteht als das zweite Dämpfungselement.

Zwischen der Ankerscheibe und dem Magnetkörper sind also nicht nur Dämpfungselemente angeordnet, die eine Übertragung von Schwingungen und/oder Stößen von der Ankerscheibe auf den Magnetkörper und umgekehrt sowie eine Anregung von Schwingungen der Ankerscheibe dämpfen, sondern die Dämpfungselemente sind auch aus unterschiedlichem Material und liegen vollflächig aufeinander, woraus eine Vielzahl von Vorteilen für den Dämpfungsmechanismus resultiert. Zum einen können Schwingungen bestimmter Frequenz besonders gut durch bestimmte Materialien gedämpft werden. Durch Vorsehen von zwei verschiedenen Dämpfungsmaterialien können daher Schwingungen eines größeren Spektrums von Frequenzen wirksam gedämpft werden. Weiterhin hat bereits der vollflächige Materialübergang von einem Material auf ein anderes Material an sich eine schwingungsdämpfende Wirkung. An einem solchen Materialübergang können insbesondere Phononen reflektiert oder gebrochen werden, so daß nur eine gedämpfte Übertragung der Schwingung und/oder des Stoßes über die Materialgrenze hinweg stattfindet. Dieser Effekt kann insbesondere dadurch gesteigert werden, dag die einzelnen Materialien des ersten und/oder des zweiten Dämpfungselements aus einem Verbundmaterial mit einer Mehrzahl von unterschiedlichen Einzelmaterialien bestehen. Bevorzugt wird beispielsweise ein faserhaltiges Material mit einer weiteren Materialkomponente. Besonders vorteilhaft zur Dämpfung haben sich Gewebematerialien und Vliesmaterialien erwiesen. In Geweben und Vliesen finden vielfache Materialübergänge bei der Ausbreitung von Schwingungen statt und ist die Ausbreitung von Schwingungen in Richtungen quer zur Längserstreckung von Fasern mit einer besonders starken Dämpfung verbunden. Mit solchen Materialien kann daher bei geringer Materialdicke bereits ein hoher Dämpfungseffekt erzielt werden.

Vorzugsweise ist zumindest das zweite Dämpfungselement aus einem, insbesondere flexiblen, Material gefertigt, das an einem Träger befestigt ist. Der Träger ist bevorzugtermaßen das erste Dämpfungselement, der Magnetkörper oder die Ankerscheibe. Das zweite Dämpfungselement kann einen elastischen Werkstoff, insbesondere ein Elastomer, ein Gummi und/oder einen elastischen Kunststoff aufweisen. Das zweite Dämpfungselement kann auch eine Beschichtung des Trägers auf einem im wesentlichen homogenen Material, insbesondere eine Lack- oder Kunststoffbeschichtung des Trägers aufweisen. Besonders bevorzugt wird eine Ausgestaltung, bei der das zweite Dämpfungselement auf den Träger aufgeklebt ist.

Insbesondere wenn der Elektromagnet des Magnetkörpers gleichstromerregbar ist, wirkt sich die Dämpfung zwischen der Ankerscheibe und dem Magnetkörper im gelüfteten Zustand besonders vorteilhaft aus. In vielen Fällen kann dann vollständig auf eine Glättung eines pulsierenden Gleichstromes, der aus Wechselstrom erzeugt worden ist, verzichtet werden.

Das erste Dämpfungselement ist vorzugsweise aus einem festen, tragfähigen Material gefertigt. Insbesondere kann das erste Dämpfungselement dann als Träger für das zweite Dämpfungselement fungieren. Ein weiterer Vorteil der Verwendung eines solchen Materials für das erste Dämpfungselement liegt darin, daß bei Kombination mit einem zweiten Dämpfungselement aus einem flexiblen, komprimierbaren und/oder faserhaltigen Werkstoff zwei Materialien mit signifikant unterschiedlichen Materialkonstanten kombiniert sind, so daß Schwingungen in einem breiten Frequenzspektrum wirksam gedämpft werden können.

Bevorzugtermaßen ist das erste Dämpfungselement aus Metallblech gefertigt, das insbesondere eine Dicke von 0,1 bis 0,3 mm hat.

Günstig ist es, wenn das erste Dämpfungselement mittels laschenartiger Randbereiche, die den Außenumfang der Ankerscheibe umfassen, mit der Ankerscheibe verkrallt ist. Die Verkrallung stellt eine besonders einfach herzustellende Lösung zur Befestigung des ersten Dämpfungselements dar. Zur Herstellung dieser Art der Befestigung wird das erste Dämpfungselement, insbesondere aus einem Metallblech, ausgestanzt, an seinen Außenrändern radial eingeschnitten, so daß jeweils zwischen zwei Einschnitten einer der laschenartigen Randbereiche entsteht, und es wird anschließend durch Umbiegen der laschenartigen Randbereiche des ausgestanzten Stücks die Verkrallung hergestellt.

Das zweite Dämpfungselement kann zwischen dem ersten Dämpfungselement und der Ankerscheibe und/oder zwischen dem ersten Dämpfungselement und dem Magnetkörper angeordnet sein. Bei einer Weiterbildung trägt das als Träger ausgebildete erste Dämpfungselement in axialer Richtung beidseitig jeweils ein weiteres Dämpfungselement, das heißt ein zweites und ein drittes Dämpfungselement. In besonderer Ausgestaltung sind weitere Dämpfungselemente vorgesehen, die insbesondere schichtartig aneinanderliegen.

Die Ankerscheibe besteht vorzugsweise aus einem formstabilen Material und hat insbesondere eine axiale Dicke, die das 5- bis 20-fache, insbesondere das 5- bis 10-fache der axialen Dicke des ersten Dämpfungselementes beträgt. In diesem Fall wird der erforderliche stabile Aufbau der Ankerscheibe allein durch diese selbst gewährleistet. Das erste und/oder das zweite Dämpfungselement tragen nicht wesentlich zu dem formstabilen Aufbau der Ankerscheibe bei.

Bei einer Weiterbildung ragt von der Ankerscheibe in Richtung des Magnetkörpers zumindest ein Führungselement ab. Das Führungselement erstreckt sich in eine korrespondierende Führungsauslassung des ersten oder des ersten und zweiten Dämpfungselements hinein oder erstreckt sich durch diese Führungsauslassung hindurch, so daß das Dämpfungselement bzw. die Dämpfungselemente in axialer Richtung beweglich geführt sind. Die Führung verhindert insbesondere eine Bewegung des Dämpfungselements bzw. der Dämpfungselemente in radialer Richtung und/oder in azimutaler Richtung. Das zumindest eine Führungselement, welches vorzugsweise ein Bolzen ist, dient insbesondere dazu, die Bremse per Hand lüften zu können, d. h. die Ankerscheibe von dem Bremsrotor entfernen zu können.

Die Erfindung wird nun anhand von Ausführungsbeispielen näher erläutert. Sie ist jedoch nicht auf diese Ausführungsbeispiele beschränkt. Die einzelnen Figuren der Zeichnung zeigen:
- Fig. 1: ein erstes Ausführungsbeispiel mit einer zwischen der Ankerscheibe und dem ersten Dämpfungselement angeordneten zweiten Dämpfungselement aus einem elastischen Material,
- Fig. 2: ein zweites Ausführungsbeispiel mit einer zwischen dem ersten Dämpfungselement und dem Magnetkörper der Bremse angeordneten Lackschicht als zweites Dämpfungselement,
- Fig. 3: ein drittes Ausführungsbeispiel mit einem als Träger ausgebildeten ersten Dämpfungselement, das in axialer Richtung beidseitig mit einem weiteren, zweiten und dritten Dämpfungselement beschichtet ist,
- Fig. 4: ein viertes Ausführungsbeispiel mit einem mit der Ankerscheibe verkrallten ersten Dämpfungselement,
- Fig. 5: ein fünftes Ausführungsbeispiel mit einem zweiten Dämpfungselement, das als Gewebe-Klebeband ausgeführt ist,
- Fig. 6: ein sechstes Ausführungsbeispiel mit einem dreischichtigen Aufbau des Dämpfungselements und
- Fig. 7: ein siebtes Ausführungsbeispiel, bei welchem die Ankerscheibe mit einem Dämpfungselement verbunden ist.

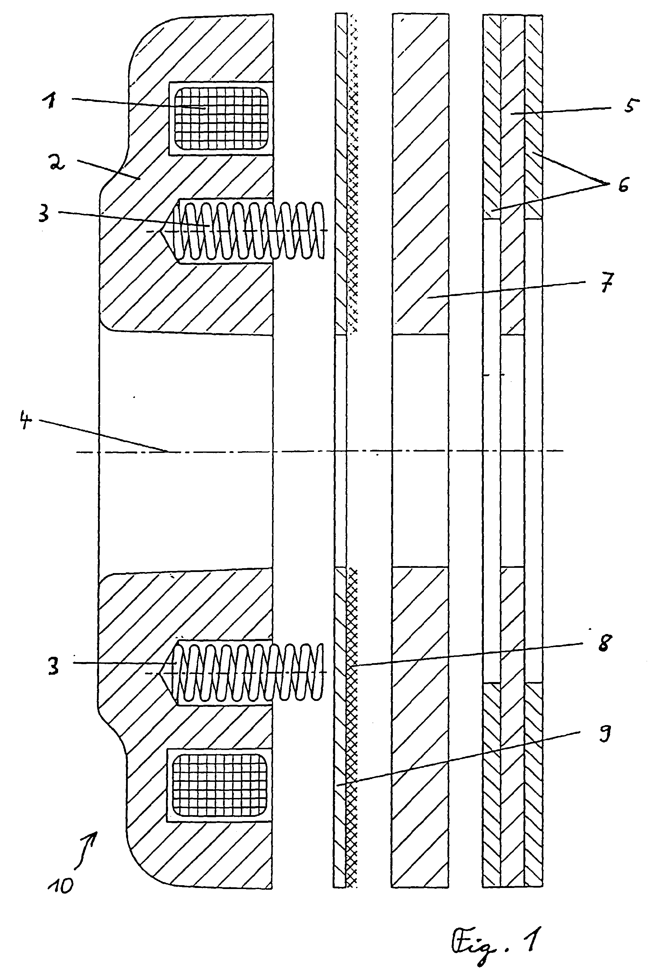

Fig. 1 zeigt eine erste Ausführungsform der erfindungsgemäßen Bremse in einem Längsaxialschnitt. Die Bremse 10 wird beispielsweise mit einem Elektromotor kombiniert, um eine Antriebswelle des Elektromotors bremsen zu können. In diesem Fall ist die in Fig. 1 eingezeichnete Rotationsachse 4 die Drehachse der Antriebswelle. Die Bremse 10 wird dann von der Antriebswelle durchdrungen, wobei ein durch einen Belagträger 5 und durch zwei in axialer Richtung einander gegenüberliegende Bremsbeläge 6 gebildeter Bremsrotor auf der Antriebswelle drehfest montiert ist. Der Magnetkörper, der eine Bremsspule 1 und einen Spulenkern 2 aufweist, wird beispielsweise durch nicht gezeigte Bolzen oder Schrauben mit einem Gehäuse des Elektromotors verbunden, so dag der Magnetkörper im wesentlichen unverdrehbar um die Rotationsachse 4 ist. Weiterhin sind eine im wesentlichen rotationssymmetrische Ankerscheibe und ein im wesentlichen rotationssymmetrisches, ringförmiges Stahlblech 9 im montierten Zustand der Bremse 10 derart geführt, daß sie zwar axial beweglich sind, jedoch im wesentlichen unverdrehbar um die Rotationsachse 4 sind. Das Stahlblech 9 ist ein erstes Dämpfungselement zur Dämpfung von Schwingungen der Bremse 10. Es trägt auf seiner der Ankerscheibe 7 zugewandten Seite ein ringförmiges, im wesentlichen rotationssymmetrisches zweites, elastisches Dämpfungselement 8, das im unkomprimierten Zustand etwa die gleiche Materialdicke wie das Stahlblech 9 hat.

Die Bremse 10 weist weiterhin Druckfedern 3 auf, die die zum Einfallen der Bremse 10 benötigte Druckkraft aufbringen, das heißt bei entregter Bremsspule 1 die Ankerscheibe 7 gegen den Belagträger beziehungsweise gegen dessen Bremsbelag 6 drücken. Durch den so erzeugten Bremsdruck wird insbesondere der ebenfalls axial bewegbar ausgelegte Bremsrotor mit dem Belagträger 5 und den Bremsbelägen 6 an eine nicht gezeigte Reibfläche des Elektromotors gedrückt.

Bei dieser, ersten Ausführungsform wird beim Lüften der Bremse 10, das heißt bei Erregung der Bremsspule 1, eine Magnetkraft auf die Ankerscheibe ausgeübt, die in der Lage ist, die entgegengesetzt gerichteten Druckkräfte der Druckfedern 3 zu überwinden. Die Ankerscheibe 7 wird daher an den Spulenkern 2 herangezogen, wobei sie in vollflächiger Anlage an das zweite, elastische Dämpfungselement 8 kommt und das elastische Dämpfungselement 8 sowie das Stahlblech 9 mitnimmt bis das Stahlblech 9 (vollflächige) in Anlage an den Spulenkern 2 gelangt. Das Anschlagen des Stahlblechs 9 an dem Spulenkern 2 wird dabei durch die Druckfedern 3 abgedämpft. Weiterhin wird das Anschlagen der Ankerscheibe 7 und des Stahlblechs 9 insgesamt durch die Dämpfungswirkung sowohl des Stahlblechs 9 als auch des elastischen Dämpfungselementes 8 abgedämpft. Dabei biegt sich insbesondere das ringförmige Stahlblech 9 gemeinsam mit dem elastischen Dämpfungselement 8, bedingt durch den zunehmenden Andruck an den Druckfedern 3, lokal im Bereich der Druckfedern 3, so daß eine zusätzliche dämpfende Wirkung erzielt wird, die ähnlich der Wirkung der bereits beschriebenen Erhebungen bei einer Dämpfungsscheibe gemäß DE 41 26 672 C2 ist. Gegenüber der dort beschriebenen Dämpfungsscheibe hat der hier vorliegende Aufbau jedoch den Vorteil, daß das Stahlblech 9 im wesentlichen so weit wie möglich vollflächig in Anlage an den Spulenkern gelangt, wenn der Lüftungsvorgang abgeschlossen ist. Im dauerhaft gelüfteten Zustand der Bremse 10 können daher nicht allein dadurch Schwingungen angeregt werden, daß nur lokal axiale, elastische Materialübergänge zwischen der Ankerscheibe und dem Magnetkörper vorhanden sind.

Insbesondere bei einem pulsierenden Gleichstrom, der ein Erregerstrom der Bremsspule 1 im dauerhaften Lüftungszustand ist und der aus Gründen einer möglichst effektiven und wirtschaftlichen Auslegung der Bremse 10 auf einen möglichst niedrigen Mittelwert eingestellt ist, wird eine Anregung von Schwingungen der Ankerscheibe 7 durch den erfindungsgemägen Aufbau wirksam verhindert beziehungsweise werden höchstens geringfügige Schwingungen angeregt. Wie auch beim Lüftungsvorgang wird insbesondere Schwingungsenergie in den einzelnen Dämpfungselementen, das heißt in dem Stahlblech 9 und in dem elastischen Dämpfungselement 8, sowie an den Materialübergängen zwischen dem Magnetkörper und dem ersten Dämpfungselement, zwischen den Dämpfungselementen untereinander und zwischen dem Dämpfungselement und der Ankerscheibe 7 dissipiert. Schwingungsenergie jeglicher Art, beispielsweise von Longitudinalschwingungen, Transversalschwingungen, Schwerpunktschwingungen und Oberflächenschwingungen, wird durch die beschriebenen Dämpfungsmechanismen dissipiert oder nicht zwischen dem Magnetkörper und der Ankerscheibe 7 übertragen.

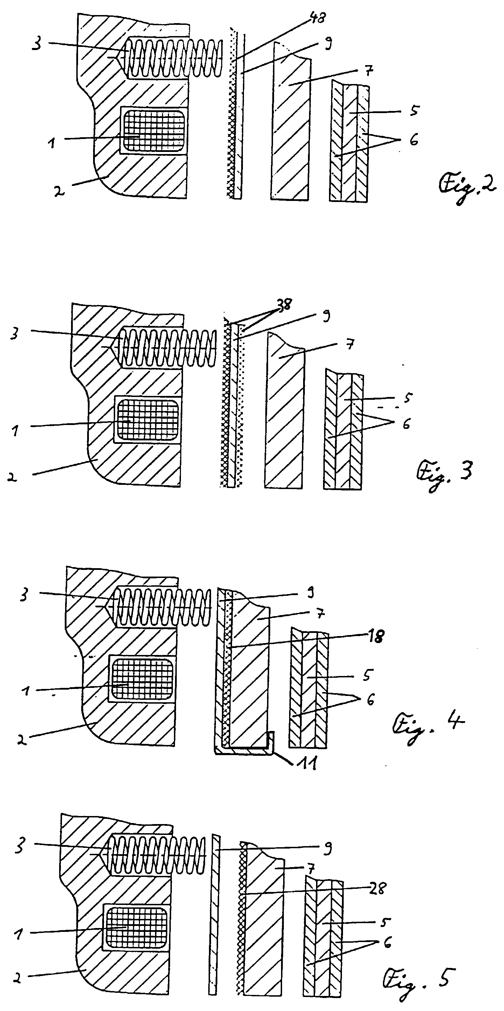

Die Ausführungsformen gemäß Fig. 2 bis Fig. 5 weisen im wesentlichen dieselben Dämpfungseigenschaften und Vorteile wie die erste Ausführungsform auf. Auf die Unterschiede wird im folgenden eingegangen.

Bei der zweiten Ausführungsform gemäß Fig. 2 ist an dem Stahlblech 9 und zwar auf der dem Magnetkörper zugewandten Seite eine Lackschicht 48 angeordnet, die als zweites Dämpfungselement dient. Der noch verarbeitungsfähige Lack der Lackschicht 48 hat gut haftende Eigenschaften auf Metall, insbesondere auf Stahl, so dag keine zusätzlichen Klebstoffe benötigt werden. Im trockenen Zustand ist die Lackschicht 48 vorzugsweise elastisch verformbar, haftet jedoch nicht an dem Spulenkern 2.

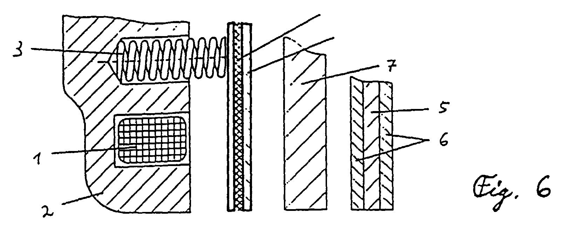

Bei der dritten Ausführungsform gemäß Fig. 3 ist auf dem als Träger ausgebildeten Stahlblech 9, das das erste Dämpfungselement darstellt, in axialer Richtung beidseitig jeweils ein Kautschukelement 38 aufgebracht. Die Kautschukelemente 38 stellen ein zweites und ein drittes Dämpfungselement dar. Die Kautschukelemente 38 bestehen insbesondere aus unterschiedlichem Kautschuk. Vorzugsweise ist das auf der linken Seite des Stahlblechs 9 angeordnete Kautschukelement 38 aus einem Material, das höhere lokale Druckbelastungen und Reibungskräfte ohne Beschädigung überstehen kann als das rechte Kautschukelement 38, da das linke Kautschukelement 38 lokalen Druck- und Reibungskräften der Druckfedern 3 ausgesetzt ist. Das linke Kautschukelement 38 besteht beispielsweise aus Hartkautschuk, das rechte Kautschukelement 38 aus weicherem Kautschuk.

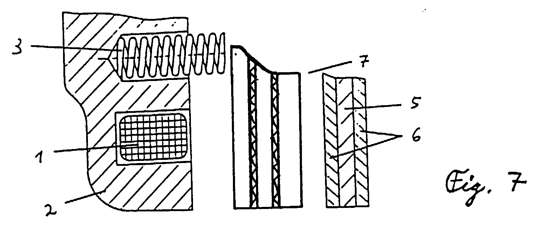

Bei der vierten Ausführungsform gemäß Fig. 4 ist das Stahlblech 9 stellenweise am Außenumfang der Ankerscheibe 7 mit dieser verkrallt, und zwar durch umgebogene laschenartige Randbereiche des Stahlblechs 9, die als Krallen 11 wirken. Von den Krallen 11 ist in Fig. 4 nur eine erkennbar, da es sich bei der Darstellung um einen Teil eines Längsaxialschnitts handelt.

Zwischen dem Stahlblech 9 und der Ankerscheibe 7 ist als zweites Dämpfungselement eine Klebstoffschicht 18 aufgebracht, so daß sich eine vorzugsweise axial beidseitige zusätzliche Klebeverbindung mit dem Stahlblech 9 und/oder mit der Ankerscheibe 7 ergibt. In der vorzugsweise zähen, plastisch verformbaren Klebstoffschicht 18 wird Stoß- beziehungsweise Schwingungsenergie besonders gut dissipiert. Durch die Klebewirkung an dem Stahlblech 9 und/oder der Ankerscheibe 7 wird die Klebstoffschicht 18 zumindest weitgehend in Form gehalten. Sie weist eine ringscheibenartige Form auf und erstreckt sich in Umfangsrichtung geschlossen um die Rotationsachse 4 (siehe Fig. 1).

Bei der fünften Ausführungsform gemäß Fig. 5, bei der es sich um eine besonders bevorzugte Ausführungsform handelt, ist ein Gewebe-Klebeband 28 auf die Ankerscheibe 7 aufgeklebt. Alternativ oder zusätzlich zu dem Gewebe-Klebeband 28 wird ein Glasfasergewebeband verwendet, das vorzugsweise durch einen temperaturbeständigen Klebstoff an der Ankerscheibe 7 befestigt ist. Alternativ oder zusätzlich können auch Mineralfasergewebebänder und/oder Klebebänder ohne Gewebe und/oder Elastomere und/oder Kunststoffe verwendet werden. Dies gilt nicht nur für die Anordnung des zweiten Dämpfungselements an der Ankerscheibe 7, wie in Fig. 5 gezeigt, sondern auch für andere, insbesondere in Fig. 1 bis Fig. 4 gezeigte Anordnungen.

Bei der in Fig. 6 gezeigten sechsten Ausführungsform umfaßt das Dämpfungselement eine erste Metall- bzw. Stahlscheibe 9 und eine zweite Metall- bzw. Stahlscheibe 9', die miteinander über eine Kunststoffschicht 58 verbunden sind. Der Kunststoff ist ein viskoelastischer Kunststoff mit Klebereigenschaften (adhäsiv). Die Metallscheiben haben eine Dicke von 0,5 bis 1,5 mm, der Kunststoff hat eine Dicke von 0,05 mm.

Die gesamte Anordnung kann mit der Ankerscheibe lösbar oder über Klebe-, Schraub- oder Schweißverbindungen nicht lösbar verbunden sein.

Bei der in Fig. 7 gezeigten siebten Ausführungsform der Erfindung weist die Ankerscheibe 7 einen Schichtaufbau auf, der jeweils aus Metallplatten 9, 9' und 7' und dazwischenliegenden Kunststoffschichten 68 besteht. Die Kunststoffschichten sind wieder sehr dünn (ca. 0,05 mm), während die Metallplatten relativ dick sind, beim hier gezeigten Ausführungsbeispiel ca. 1,5 mm dick. Ein wesentlicher Punkt der Erfindung besteht also - wie dies aus den obigen Erläuterungen hervor geht - darin, dag (mindestens) zwei Dämpfungselemente vorgesehen sind, die jeweils eine verschiedene Wirkungsweise haben.

Das erste Dämpfungselement vereint zwei Funktionsweisen in sich: Zum einen stellt es eine elastische Dämpfungsvorrichtung dar, zum zweiten stellt es ein Trägermaterial für das zweite Dämmungselement dar. Es liegt also kein bloßes Hintereinanderschalten von Materialien vor. Oberflächenwellen auf dem ersten Dämpfungselement werden, insbesondere wenn sie eine hohe Frequenz aufweisen, vom zweiten Dämpfungselement gedämpft bzw. absorbiert. Die Dicke der Dämpfungselemente wird hierbei vorzugsweise sehr gering gewählt, um den Luftspalt zwischen der Ankerscheibe und dem Magnetkörper nicht unnötig zu vergrößern.

Weiterhin ist es äußerst bevorzugt, das zweite Dämpfungselement "klebrig" auszubilden. Es wird also eine Kunststoffschicht auf die Metallschicht(en) aufgewalzt und damit befestigt. Die Kunststoffschicht hat also selbstklebende Eigenschaften. Alternativ ist auch die Verwendung eines beschichteten klebrigen Films möglich.

Das erfindungsgemäße Dämpfungselement kann auch zwischen der Ankerscheibe und dem Belagträger eingebaut werden, was große Vorteile mit sich bringt.

Je nach Aufbau der Bremse ist bei der Auswahl des Anbringungsortes des zweiten elastischen Elements insbesondere auch zu berücksichtigen, daß das zweite elastische Element, jedenfalls bei den beschriebenen Ausführungsformen, aufgrund des weniger widerstandsfähigen Materials einem größeren Verschleiß unterworfen ist, als das erste Dämpfungselement, das aus Stahl besteht. Das zweite Dämpfungselement sollte daher an einer möglichst gut bei Wartungsarbeiten zugänglichen Stelle angeordnet sein.

Auf den Gesamtaufbau der Bremse, insbesondere im montierten Zustand an einem Elektromotor, soll hier nicht näher eingegangen werden. Ein möglicher Aufbau, der sich lediglich hinsichtlich der Dämpfungselemente unterscheidet, ist beispielsweise in der DE 41 26 672 C2 beschrieben.

### BEZUGSZEICHENLISTE

- 1: Bremsspule
- 2: Spulenkern
- 3: Druckfeder
- 4: Rotationsachse
- 5: Belagträger
- 6: Bremsbelag
- 7: Ankerscheibe
- 8: elastisches Dämpfungselement
- 9: Stahlblech
- 10: Bremse
- 11: Kralle
- 18: Klebstoffschicht
- 28: Gewebe-Klebeband
- 38: Kautschukelement
- 48: Lackschicht

## Patentansprüche

1. Elektromagnetisch betätigbare Bremse (10) mit
- einem Magnetkörper (1, 2),
- einem Bremsrotor (5, 6), der auf einer Welle, insbesondere der Antriebswelle eines Elektromotors, drehtest montierbar ist, so dag die Welle bremsbar ist, und
- einer Ankerscheibe (7), die durch eine Magnetkraft eines Elektromagneten des Magnetkörpers (1, 2) entgegen einer Federkraft beziehungsweise durch die Federkraft parallel zur Längsrichtung der Rotationsachse (4) der Welle axial bewegbar ist,
wobei die Ankerscheibe (7) im gebremsten Zustand an einer Bremsfläche des Bremsrotors (5, 6) anliegt,
**dadurch gekennzeichnet**, daß
zwischen der Ankerscheibe (7) und dem Magnetkörper (1, 2) oder zwischen der Ankerscheibe (7) und dem Bremsrotor (5, 6) in axialer Richtung hintereinander ein erstes Dämpfungselement (9) und ein zweites Dämpfungselement (8; 18; 28; 38; 48) zur Dämpfung von Schwingungen der Bremse (10) angeordnet sind, wobei das erste Dämpfungselement (9) aus einem anderen Material besteht als das zweite Dämpfungselement (8; 18; 28; 38; 48;).

2. Bremse nach Anspruch 1,
**dadurch gekennzeichnet**, daß
die Bremse (10) zumindest eine Druckfeder (3) zur Erzeugung der Federkraft aufweist, so daß die Ankerscheibe (7) bei entregtem Elektromagnet durch die Federkraft gegen den Bremsrotor (5, 6) gedrückt wird.

3. Bremse nach Anspruch 1 oder 2,
**dadurch gekennzeichnet**, daß
das erste Dämpfungselement (9) aus einem festen, tragfähigen Material besteht.

4. Bremse nach Anspruch 3,
**dadurch gekennzeichnet**, daß
das erste Dämpfungselement (9) aus Metallblech gefertigt ist, insbesondere aus 0,1 bis 0,3 mm dickem Stahlblech.

5. Bremse nach Anspruch 3 oder 4,
**dadurch gekennzeichnet**, daß
das erste Dämpfungselement (9) mittels laschenartiger Randbereiche (11), die den Außenumfang der Ankerscheibe (7) umfassen, mit der Ankerscheibe (7) verkrallt ist.

6. Bremse nach einem der Ansprüche 1 bis 5,
**dadurch gekennzeichnet**, daß
das zweite Dämpfungselement (8; 18; 28; 38; 48) aus einem, insbesondere flexiblen, Material gefertigt ist und an einem Träger befestigt ist.

7. Bremse nach Anspruch 6,
**dadurch gekennzeichnet**, daß
der Träger das erste Dämpfungselement (9), der Magnetkörper oder die Ankerscheibe (7) ist.

8. Bremse nach Anspruch 6 oder 7,
**dadurch gekennzeichnet**, daß
das zweite Dämpfungselement (28) einen faserhaltigen Werkstoff, insbesondere ein Gewebe oder Vlies, aufweist.

9. Bremse nach einem der Ansprüche 6 bis 8,
**dadurch gekennzeichnet**, daß
das zweite Dämpfungselement (8; 38;) einen elastischen Werkstoff, insbesondere ein Elastomer, ein Gummi und/oder einen elastischen Kunststoff, aufweist.

10. Bremse nach einem der Ansprüche 6 bis 9,
**dadurch gekennzeichnet**, daß
das zweite Dämpfungselement (18; 48) eine Beschichtung des Trägers aus einem im wesentlichen homogenen Material, insbesondere eine Lack- oder Kunststoffbeschichtung, aufweist.

11. Bremse nach einem der Ansprüche 6 bis 9,
**dadurch gekennzeichnet**, daß
das zweite Dämpfungselement (18; 28) auf den Träger aufgeklebt ist.

12. Bremse nach einem der Ansprüche 1 bis 11,
**dadurch gekennzeichnet**, daß
zumindest ein drittes Dämpfungselement (8) zwischen der Ankerscheibe (7) und dem Magnetkörper (1, 2) angeordnet ist, wobei das erste (9) bis dritte (38) Dämpfungselement in axialer Richtung hintereinander angeordnet sind.

13. Bremse nach Anspruch 12,
**dadurch gekennzeichnet**, daß
das als Träger nach Anspruch 6 ausgebildete erste Dämpfungselement (9) in axialer Richtung beidseitig jeweils ein weiteres Dämpfungselement (38) trägt.

14. Bremse nach einem der Ansprüche 1 bis 13,
**dadurch gekennzeichnet**, daß
die Ankerscheibe (7) aus einem formstabilen Material besteht und insbesondere eine axiale Dicke hat, die das 5-bis 20-fache, insbesondere das 5- bis 10-fache, der axialen Dicke des ersten Dämpfungselement (9) beträgt.

15. Bremse nach einem der Ansprüche 1 bis 14,
**dadurch gekennzeichnet**, daß
der Elektromagnet des Magnetkörpers (1, 2) gleichstromerregbar ist.

16. Bremse nach einem der Ansprüche 1 bis 15,
**dadurch gekennzeichnet**, daß
von der Ankerscheibe in Richtung des Magnetkörpers zumindest ein Führungselement abragt, welches sich in eine korrespondierende Führungsauslassung des ersten oder des ersten und zweiten Dämpfungselements hinein oder durch diese hindurch erstreckt, so daß das Dämpfungselement bzw. die Dämpfungselemente in axialer Richtung beweglich geführt sind.

17. Elektromotor mit einer Bremse (10) nach einem der Ansprüche 1 bis 16,
wobei der Bremsrotor (5, 6) der Bremse (10) auf einer Antriebswelle des Elektromotors drehtest montiert ist und wobei der Magnetkörper (1, 2) die Ankerscheibe (7) und die Dämpfungselemente (8, 9; 18; 28; 38; 48) derart geführt beziehungsweise an einem Gehäuse des Elektromotors befestigt sind, daß sie im wesentlichen unverdrehbar um die Rotationsachse (4) der Antriebswelle sind.
